(19) Europäisches Patentamt
European Patent Office
Office européen des brevets

(11) **EP 4 443 395 A1**

(12) **EUROPEAN PATENT APPLICATION**

(43) Date of publication:
**09.10.2024 Bulletin 2024/41**

(21) Application number: **23166276.8**

(22) Date of filing: **03.04.2023**

(51) International Patent Classification (IPC):
***G06T 19/00*** *(2011.01)*

(52) Cooperative Patent Classification (CPC):
**G06T 19/00;** G06T 2210/41; G06T 2219/016

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Inheart**
**33600 Pessac (FR)**

(72) Inventors:
• **PEYRAT, Jean-Marc**
**33600 PESSAC (FR)**
• **GRANGE, Benjamin**
**33600 PESSAC (FR)**

(74) Representative: **Aquinov**
**12, Cours Xavier Arnozan**
**33000 Bordeaux (FR)**

(54) **METHOD FOR RENDERING COMPLEX MODELS OF ORGANS WITH MESH EXTRUSION FOR ENHANCED DEPTH PERCEPTION**

(57) A computer-implemented method for the rendering of a 3D model of at least a portion of an organ comprising the steps of:

step of receiving a list of classes and a first mesh representing said at least a portion of an organ, said first mesh comprising a collection of sub-meshes each sub-mesh being associated with a single class among said list of classes, and the collection of sub-meshes being sorted according to a predetermined sorting criterion;

step of sub-meshes extrusion, comprising, for each point of at least one sub-mesh of said collection of sub-meshes, the computation of spatial coordinates of an extruded point from spatial coordinates of said point, from a given extrusion direction and from the rank of said mesh in the collection according to the sorting criterion; the extruded points computed from the points of a sub-mesh forming an extruded sub-mesh;

step of rendering a 3D model of the organ comprising the extruded sub-meshes.

[Fig. 1]

## Description

## Technical field.

The current invention relates to the field of computerized methods for medical diagnosis. In particular, the invention relates to a method and system for improving the visualization of a computer-generated model of a portion of an organ, for the depiction of the structural properties of the heart in a medical setting.

## Background.

In numerous fields, including medicine, biology, and pharmaceuticals, 3D organ models are indispensable since they provide a graphical representation of organ anatomy and structure applicable in a range of scenarios.

In the medical field, 3D models of organs can be used to plan and practice surgeries, allowing surgeons to familiarize themselves with the organ's anatomy before to conducting the surgery. In addition, they can be used to practice and assess surgical techniques, thereby reducing the risk of complications and improving patient outcomes.

In biology, 3D organ models can be used to explore the structure and function of organs, allowing researchers to obtain a deeper comprehension of internal activities. In addition, they can be used to observe and study the effects of diseases and other disorders on the organs, providing crucial information regarding prospective treatments and cures.

The increased usage of 3D models in recent years has made it possible to diagnose, treat, and monitor a number of medical conditions. This development has been greatly contributed to by Computed Tomography (CT) scans, a medical imaging tool that generates detailed images of the body's inside. In addition to diagnostic applications, CT scans are being used for preventive medicine and disease screening.

The field of cardiology is one in which CT scans have made a significant contribution. Using a CT scan to collect vital information on the cardiac or coronary architecture, medical professionals can better comprehend the structure and function of the heart. CT scans of the heart can detect, diagnose, and monitor coronary artery disease. Recently, they have also played a vital role in the transcatheter repair and replacement of heart valves.

Coronary CT angiography (CCTA) and coronary CT calcium scanning are two forms of CT imaging of the heart. CCTA employs CT scans to examine the coronary arteries of the heart and determine the degree of obstruction, whereas coronary CT calcium scans are used to look for calcium deposits in the coronary arteries, which can narrow the arteries and increase the risk of a heart attack.

In cardiology, segmentation of a three-dimensional model of the heart can be used to measure the thickness of the heart wall, also known as the ventricular wall thickness. These data can be used to diagnose and monitor a variety of heart diseases, including hypertrophic cardiomyopathy and dilated cardiomyopathy. By evaluating the thickness of the heart wall, physicians can identify if the heart is enlarged or shrunken, thicker or thinning relative to normal, which may be an indicative of cardiac disease.

Segmentation can also be performed to examine the blood flow distribution within the heart. By segmenting the heart, clinicians may observe how blood flows through the heart and detect regions where blood flow may be restricted or obstructed. These data can be used to identify and treat cardiovascular problems such as coronary artery disease.

In addition, segmentation of a 3D model of the heart can be utilized to investigate the mobility and function of heart valves. By segmenting the heart and analyzing the movement of the valves, surgeons may establish if the valves are working properly and detect any regions where valves may be leaking or not closing properly.

It can be challenging to render a complex meshed 3D model comprising several sub-meshes in contact with each other, in particular when said sub-meshes are coplanar subregions of the 3D model. Existing solutions for rendering such models involve time-consuming and resource-intensive processes that can be challenging to execute. In particular, rendering models of organs with multiple sub-meshes representing different structures with varying thicknesses can be especially difficult. While previous methods have attempted to render this kind of 3D models in a meaningful way, they have not been entirely successful in providing high-quality images while also simplifying the rendering process.

Therefore, there is a need for an improved method for rendering complex 3D models of portions of organs that addresses these challenges and provides a more efficient and accurate way of rendering sub-meshes. The computer-implemented method described in the claims provided addresses this need by utilizing a predetermined sorting criterion to extrude certain sub-meshes and enhance the depth perception of the rendered image. The method allows for efficient rendering of models of different parts of an organ with varying classifications and properties, further improving the rendering process.

It is to be understood that both the foregoing general description and the following detailed description are exemplary and explanatory only and are not restrictive of the disclosure.

## GENERAL DESCRIPTION.

According to an aspect of the present invention, there is provided a computer-implemented method for the rendering of a 3D model of at least a portion of an organ, the method including the steps of:

a. step of receiving a list of classes { c[1] ,..., c[p] } and a first mesh M representing said at least a portion of an organ, said first mesh M comprising a collection of N sub-meshes { m[1] ,..., m[N] }, each sub-mesh being associated with a single class among the list of classes, and the collection of sub-meshes being sorted according to a predetermined sorting criterion;

b. step of sub-meshes extrusion, comprising, for each point of at least one sub-mesh of said collection of sub-meshes, the computation of spatial coordinates of an extruded point from spatial coordinates of said point, from a given extrusion direction and from the rank of said mesh in the collection according to the sorting criterion; the extruded points computed from the points of a sub-mesh forming an extruded sub-mesh;

c. step of rendering a 3D model of the organ comprising the extruded meshes.

Advantageously, the first mesh M is a computational representation of the portion of the organ. The portion of the organ can be a small segment, such as a specific blood vessel or nerve, or a larger segment, such as an entire lobe or section of the organ.

Advantageously, the first mesh M is partitioned into N sub-meshes { m[1] ,..., m[N] }; the use of sub-meshes enables the method to break down the first mesh M into smaller, more manageable parts, which can be more easily processed. The partitioning of the first mesh M into sub-meshes is particularly useful when dealing with complex structures, where it may be difficult to distinguish between different parts.

The invention provides that each sub-mesh is associated with a single class. This association allows to identify each sub-mesh according to a property defining the class. the property defining the class associated with each sub-mesh can vary depending on the application and the specific organ portion being modeled. Examples of properties defining the class associated with a sub-mesh might include:

- Thickness: sub-meshes may be classified based on the thickness of the organ portion they represent.
- Tissue type: sub-meshes may be classified based on the type of tissue (e.g., muscle, connective tissue, epithelial tissue) they represent.
- Anatomical location: Sub-meshes may be classified based on their location within the organ portion being modeled (e.g., ventricle, atrium, pulmonary artery).
- Function: sub-meshes may be classified based on the specific function they perform within the organ portion (e.g., conducting electrical signals, filtering blood).
- Pathology: sub-meshes may be classified based on the presence of specific pathological conditions (e.g., tumor, inflammation, fibrosis).

In the method, the sorting criterion is based on the associated classes of the sub-meshes. By assigning a numerical value to each sub-mesh based on its associated class, the method can establish a total order on the sub-meshes. The total order can be used to sort the sub-meshes according to their associated classes, which helps to ensure a correct rendering of the final 3D model of the portion of the organ comprising the extruded meshes.

By using a sorting criterion, the method allows to discern among the meshes to be extruded and prioritize certain sub-meshes over others. This can be particularly useful when rendering complex organs or structures, for which it may be difficult to distinguish between different parts. Furthermore, the method can ensure that the most important parts of the organ are given the highest priority, while less important parts are given lower priority.

Advantageously, the sorting criterion might be based on a variety of factors, such as the class of each sub-mesh, the significance of each sub-mesh to the visual representation as a whole, or the link between sub-meshes. For instance, sub-meshes belonging to a particular class or region of interest could be sorted to the front of the model, whilst sub-meshes belonging to less significant regions could be put to the back. The sorting criterion can be established depending on the intended visual representation and can be altered as necessary for the model to be rendered optimally.

Advantageously, the ordering of the meshes by the sorting criterion allows to discern among the meshes to be extruded. In the context of the present invention, a sorting criterion is used to define a total order on the collection of sub-meshes, by specifying a set of rules that determine how the meshes should be ordered. For example, meshes might be ordered based on their size, their distance from a particular point, or their complexity, corresponding to an ascending order based.

Advantageously, by extruding the sub-meshes, the method can create a more realistic and visually appealing model.

It is then understood that the invention proposes to take advantage of the extrusion of one or more meshes to improve the final rendering of the model. In particular, the extrusion of one or more meshes allows them to be repositioned in order to improve the quality of the final rendering of the model.

In the context of the present invention, the term "medical image segmentation" refers to the segmentation of known anatomic structures from medical images.

Anatomic structures of interest include organs or portions thereof, such as cardiac ventricles or kidneys, abnormalities such as tumors and cysts, as well as other structures such as bones, vessels, brain structures etc.

In the context of the present invention, the term "mesh" refers to any triplet composed of vertices, edges, and faces that together form a set of polygonal or polyhedral patches which match up, at least partially, at edges and vertices. The vertices are points in space that define the corners of the faces, while the edges are the lines that connect the vertices, and the faces are the flat surfaces that connect the edges and define the boundaries of the mesh.

A mesh can be used to represent the surface of an object or the entire volume of an object. In the case of the present invention, a mesh is used to represent a portion of an organ with a collection of sub-meshes, each of which is associated with a specific class based on its thickness range.

Meshes can be defined for any spatial dimension; in a 2D mesh, the vertices, edges, and faces are imbedded into a two-dimensional manifold, while in a 3D mesh, they are imbedded into a three-dimensional space.

In the context of the present invention, a "sub-mesh" is a section of a larger mesh that is capable of being handled independently.

By dividing complex objects into smaller, more manageable pieces, this makes it possible to manipulate and render them more effectively.

In the context of the present invention, sub-meshes are used to represent different regions of a portion of an organ based on their thickness. This allows for a more accurate and detailed representation of the organ's structures. The use of sub-meshes to represent different parts of an organ is a concept that is also used in medical imaging.

In the context of the present invention, "rendering" refers to a technique in computer graphics that generates a finished image or animation from a collection of digital models and supporting data. Rendering converts 3D models and scenes into 2D graphics that may be viewed on a computer screen or printed on paper. By using algorithms that represent the behavior of light interacting with materials, the rendering process is carried out by considering a variety of elements, including the position and brightness of light sources, the characteristics of surfaces in the image, and the camera's position.

In the context of the present invention, a "total order" over a finite collection of elements is a binary relation satisfying the properties of reflexivity, transitivity, and antisymmetry.

In one embodiment, alternative or cumulative, prior to the classes and mesh reception step:

    a. a step of receiving a mapping of points representing said portion of the organ, each point of said mapping of points being labelled with a value of at least one parameter indicating a local characteristic of said portion of the organ at or around said point position;
    b. a step of segmentation of the received mapping of points from said parameter values and said list of classes to generate a plurality of sub-meshes;
    c. a step of sorting said plurality of sub-meshes according to said sorting criterion to construct said collection of sorted sub-meshes {m[1] ,..., m[N]}, said sorting criterion being based on the associated classes of the sub-meshes.

Advantageously, by labeling each point with a value of at least one parameter indicating a local characteristic of the organ at or around that point position, such as tissue density or blood flow, the resulting meshed model can better capture the nuances and complexities of the organ portion. This improved accuracy can lead to more accurate diagnoses and treatment plans for medical conditions affecting the organ portion. Additionally, it can lead to more efficient rendering and visualization of the organ portion, allowing medical professionals to identify and analyze any issues or abnormalities quickly and easily.

In a medical context, the value associated with each point on the mapping of points can represent a local characteristic of the portion of the organ at or around that point. For example, in the case of imaging the heart, the value at each point may correspond to the distance between the inner wall of the heart and the outer wall of the heart. In this case, the value at the point represents the width from the inside of the heart to that location defined by the point. Furthermore, other types of parameters associated with the mapping of points can be physiological, geometrical, electrical, or structural properties of the organ. For example, the associated value can be the value of an electrical potential, the concentration of a chemical compound like potassium and/or calcium, or a hydration level of the tissue.

As an example, each class of said list of classes might be a range of possible values of said parameter; and the segmentation step might comprise a selection of all points of said mapping of points whose said parameter values fall within the range of one class of said list of classes, said selected points forming thus a sub-mesh associated to this class. Said segmentation step might comprise a direct thresholding of the first values of the points of said mapping of points, for instance following a comparison of their thickness to a thickness level, for example of 1mm, 2mm, 3mm, 4mm or 5mm. Said segmentation step might also be implemented from any suitable region growing method, with considering points labelled with a parameter value lower than a given threshold as seed points and recursively considering neighbors of these points with estimating whether they should be considered as part of a region of interest upon their first parameter values.

Advantageously, by segmenting the received mapping of points based on these values, sub-meshes can be generated that are representative of regions of the heart that share similar values. In the particular case where said parameter value is the thickness of the heart wall, this allows for the sorting of the sub-meshes according to a predetermined criterion, such as increasing order of thickness, to construct a collection of sorted sub-meshes that can be used to generate a meshed model of the heart forming a thickness map of the heart. The advantage of this approach is that it enables a more accurate and detailed representation of the heart's structure and characteristics, which can be useful for diagnostic and treatment planning purposes.

Advantageously, the sub-meshes are sorted according to a predetermined sorting criterion.

A sorting criterion is a set of rules used to order a collection of objects.

The sorting criterion is operated by a comparison operator denoted by " $\leq$ ", said comparison operator is a binary relation defining a total order over the finite collection of meshes. The total order property allows compare any two sub-meshes between them and allows to write $m[1] \leq m[2] \leq \cdots \leq m[N]$.

A total order is a binary relation that satisfies three properties: reflexivity, transitivity, and antisymmetry. A sorting criterion can be used to define a total order on a collection of objects or elements.

To establish a total order, a sorting criterion must satisfy the following conditions:

- Reflexivity: Each element in the collection is related to itself, i.e., a $\leq$ a for all a in the set.

- Antisymmetry: If a $\leq$ b and b $\leq$ a, then a = b for all a, b in the collection.

- Transitivity: If a $\leq$ b and b $\leq$ c, then a $\leq$ c for all a, b, and c in the collection.

By assigning a numerical value to each object in the set, a sorting criterion can be defined to satisfy the above conditions based on how well said assigned value meets the sorting criterion. Objects with higher numerical values are considered greater than those with lower numerical values. The sorting criterion can then be used to sort the objects in the collection according to their numerical values, thereby establishing a total order.

In a cumulative embodiment, each sub-mesh of the collection of sub-meshes {m[1] ,..., m[N]} represents a region of said portion of an organ whose thickness falls within a predetermined thickness range, wherein each thickness range is defined by a lower bound and an upper bound and wherein the thickness ranges are sorted such that a first range following a second range presents a lower bound and/or an upper bound greater than the lower bound and/or respectively the upper bound of the second range.

In one example, each sub-mesh of the collection of sub-meshes {m[1] ,..., m[N]} represents a region of said portion of an organ whose thickness falls within a predetermined thickness range, said thickness range forming the associated class to said sub-mesh, and wherein said thickness ranges forms an increasing family of ranges for the inclusion operator.

Advantageously, each sub-mesh in the collection of sub-meshes represents a region of the organ with a thickness within a predetermined range. The thickness range defines the class of the sub-mesh. In particular, the class c[i] representing a thickness range can take the form of an interval, eventually reduced to a point, of the form:

$$c[i] := [\min[i], \max[i]),$$

Where min[i] and max[i] are real numbers defining the lower and upper bounds of the class. Such interval is a closed interval on the left and open to the right, indicating that the max[i] value is not contained in said interval. The particular case of an interval with min[i]=max[i] stands for the singleton {min[i]}.

In this case, it is assumed that for any couple of indices (I,j) such that i<j, then c[i] is a subset of c[j] and that the union of all the thickness ranges c[i] is equals to c[i*] where i* is the maximal index of the classes.

In a cumulative embodiment, each sub-mesh of the collection of sub-meshes {m[1] ,..., m[N]} represents a region of said portion of an organ whose thickness falls within a predetermined thickness range, said thickness range forming the associated class to said sub-mesh, and wherein said thickness ranges are disjoint ranges that are sorted by increasing order of thickness.

Advantageously, each sub-mesh in the collection of sub-meshes represents a region of the organ with a thickness within a predetermined range. The thickness range defines the class of the sub-mesh. In particular, the class c[i] representing a thickness range can take the form of an interval, eventually reduced to a point, of the form:

$$c[i] := [\min[i], \max[i]),$$

Where min[i] and max[i] are real numbers defining the lower and upper bounds of the class. Such interval is a closed interval on the left and open to the right, indicating that the max[i] value is not contained in said interval. The particular case of an interval with min[i]=max[i] stands for the singleton {min[i]}.

It is assumed that for any couple of indices (i,j), if i<j, then max[i]<min[j]. By doing so, said collection of classes { c[1] ,..., c[p] } satisfy the condition :

$$\bigcap_{i=1}^{p} c[i] = \emptyset,$$

Said condition implies, in particular, that for any pair of indices i and j, the classes c[i] and c[j] are disjoint classes.

It is to be noted that this condition does not avoid the union of classes from being a connected interval of the form [a,b] with a,b real numbers.

The thickness ranges are disjoint and sorted by increasing order of thickness. This approach allows for efficient differentiation of parts of interest and improves the rendering of the model by differentiating part of the organ portion. Additionally, from a medical perspective, and can help to identify and analyze potential issues related to the thickness of different regions of the organ.

By doing so, that the thickness of each sub-mesh is evaluated and determined to be within a specific range $[min[i],max[i])$. This is used to classify the sub-mesh based on its thickness. In particular, each sub-mesh is associated with a class $c[i]$ that corresponds to its thickness range $[min[i],max[i])$. This association is made based on the predetermined thickness range of the sub-mesh.

Advantageously, the thickness ranges associated with the sub-meshes do not overlap and are arranged in increasing order of thickness. This allows for a clear classification of the sub-meshes based on their thickness and allows for easy identification and manipulation of the sub-meshes based on their associated thickness range.

In one embodiment, alternative or cumulative, said sub-meshes extrusion step comprises, for each sub-mesh to be extruded, a sub-step of determining said projection point of said sub-mesh, and a sub-step of projecting each point of said sub-mesh along a direction passing through said point and said projection point with a distance determined from the rank of said sub-mesh according to the sorting criterion.

By doing so, the method enables the creation of a three-dimensional representation of the organ portion based on the collection of sub-meshes sorted according to their thickness and associated class. The sub-mesh extrusion step involves projecting each point of the sub-mesh along a direction passing through the point and a projection point, which is determined for each sub-mesh.

Advantageously, the projection point allows the extrusion of the sub-meshes in a way that preserves the topology and the shape of the original organ portion. By determining the projection point for each sub-mesh and projecting each point along a direction passing through the point and the projection point, the extrusion maintains the coherence and continuity of the organ portion. This approach enables the creation of a coherent and smooth 3D model of the organ portion, which is essential for accurate medical simulations and analyses. Additionally, by projecting the points along a specific direction with a distance determined by the sorting criterion, the extrusion ensures that the resulting mesh preserves the thickness information of the organ portion, making it easier to analyze and interpret the resulting model.

The projection point is the point on the outer surface of the organ portion where the sub-mesh will be extruded. The distance between the point and the projection point is determined based on the rank of the sub-mesh according to the sorting criterion, which is based on the associated class and thickness range. The extruded sub-meshes are combined to form a three-dimensional representation of the organ portion, with each sub-mesh representing a region of the organ portion that falls within a specific thickness range and is associated with a specific class. The resulting representation allows for accurate visualization and analysis of the organ portion, which can be used for diagnosis and treatment planning purposes.

In one embodiment, alternative or cumulative, the step of rendering of said meshed model M2 includes a sub-step of rendering at least the extruded sub-meshes according to the distance of each sub-mesh to a given viewpoint and according to said specified sorting criterion.

Advantageously, the distance of each sub-mesh from the viewpoint is used to determine how it should be render, with those closer to the viewpoint being prioritized. The specified sorting criterion is also used to determine how the sub-meshes should be rendered, with the sorted collection of sub-meshes $\{m[1],...,m[N]\}$ determining the order in which they should be rendered.

In one embodiment, alternative or cumulative, the sub-step of rendering the extruded sub-meshes comprises:

a. a step of sorting said extruded sub-meshes according to said predetermined sorting criterion into a sorted collection of sub-meshes; and
b. a step of computing an image of said part of said organ from said given viewpoint; each pixel of said image being iteratively computed from each sub-mesh of said sorted set; wherein, for each iteration, a current value of said pixel is computed from the previous value of said pixel and from the value of a corresponding fragment of a current sub-mesh of said sorted set; said current value being computed with composing the previous value of said pixel with the said value of corresponding fragment according to:

○ a first color composition operator if the difference among the distance of said corresponding fragment between said viewpoint and a buffered distance is lower than a predetermined threshold,
○ a second color composition operator otherwise, the buffered distance being updated to said distance of said corresponding fragment to said viewpoint for the next iteration.

In one cumulative embodiment, the first color composition operator is an "over type" color blending operator, and the second color composition operator is an "under type" color blending operator.

Advantageously, the "over type" color blending operator blends the colors of the extruded sub-meshes with the colors of the sub-meshes that are behind them, i.e., closer to the viewer. This operator produces a color composition in which the colors of the extruded sub-meshes have a greater influence on the final color than the colors of the sub-meshes behind them. On the other hand, the "under type" color blending operator blends the colors of the extruded sub-meshes with the colors of the sub-meshes that are in front of them, i.e., farther from the viewer. This operator produces a color composition in which the colors of the sub-meshes in front have a greater influence on the final color than the colors of the extruded sub-meshes. The use of both color blending operators allows for a more realistic representation of the organ's portion, enhancing the perception of depth and volume.

In one embodiment, alternative or cumulative, said collection of sub-meshes represents at least a first part of said organ and is received as being classified as "ordered structure"; wherein the method also comprises a step of receiving a second mesh representing at least a second part of said organ and classified as "opaque structure" and a step of receiving a third mesh representing at least a third part of said organ and classified as "transparent structure"; and wherein the step of rendering of the model comprises :

> a. a sub-step of rendering the first mesh with computing a first image of said first part of said organ from a given viewpoint;
> b. a sub-step of rendering the second mesh with computing a second image of said second part of said organ from said given viewpoint;
> c. a sub-step of rendering the third mesh with computing a third image of said third part of said organ from said given viewpoint;
> d. a sub-step of composing said first, second and third images in a final image, the composition being operated considering the classification of the first, second and third meshes.

By doing so, the method enables the creation of a final image that takes into account the classifications of the different meshes and their respective properties, resulting in a more accurate representation of the organ as a whole. By computing separate images for each mesh and then composing them into a final image, the method allows for greater flexibility and control over the final output. This can be particularly useful in medical applications where different parts of an organ may have different properties or be of different importance for diagnosis or treatment.

Advantageously, by rendering the first mesh and computing a first image of the part of the organ represented by that mesh, the user can see the details of that specific part of the organ and gain a better understanding of its structure and characteristics.

Advantageously, by rendering the second mesh and computing a second image of the second part of the organ from the given viewpoint, the method can create a visual representation of the opaque structure, allowing the viewer to see the details of that part of the organ.

Advantageously, by rendering the third mesh separately, it can be blended with the other rendered images of the first and second meshes to create a final image that shows the complete organ with its internal and external structures visible. This can be particularly useful in applications where it is important to see the internal structures of the organ for diagnostic purposes.

By doing so, the sub-step of composing said first, second and third images in a final image accurately represents the structure of the organ as a whole.

A second aspect of the present invention relates to a computer program product, which includes code instructions that when executed in a computer implement the steps of the method of any of the previous claims.

This computer program product contains code instructions that, when executed in a computer, implement the steps of the method described in any of the previous claims. In other words, the computer program product is designed to automate the steps of the method and can be executed on a computer to facilitate the rendering of a meshed model of a portion of an organ. This aspect of the invention is particularly useful for healthcare professionals and researchers who require a quick and accurate method of rendering detailed and realistic models of organs. The computer program product can be distributed in various ways, such as on a tangible storage medium or via a network and can be used on different types of computers or processors.

One other object of the invention is a computer implemented method for the rendering of a 3D model of at least a portion of an organ, comprising the steps of :

> a. a step of receiving a list of classes and a first mesh representing said at least a portion of an organ, said first mesh comprising a collection of N sub-meshes, each sub-mesh being associated with a single class among said list of classes, and the collection of sub-meshes being sorted according to a predetermined sorting criterion
> b. a step of computing an image of said portion of said organ from a given viewpoint; each pixel of said image being iteratively computed from each sub-mesh of said sorted collection; wherein, for each iteration, a current value of said pixel is computed from the previous value of said pixel and from the value of a corresponding fragment of a current sub-mesh of said sorted set; said current value being computed with composing the previous value of said pixel with the said value of corresponding fragment according to:
>
> > ∘ a first color composition operator if the difference among the distance of said corresponding fragment between said viewpoint and a buffered distance is lower than a predetermined threshold,

○ a second color composition operator otherwise, the buffered distance being updated to said distance of said corresponding fragment to said viewpoint for the next iteration.

## DETAILED DESCRIPTION.

In the following description, numerous specific details are set forth to provide a thorough understanding of the present disclosure. However, it will be apparent to those skilled in the art that the present disclosure may be practiced without such specific details. In other instances, some parts may be shown in block diagram form in order not to obscure the present disclosure in unnecessary detail. For the most part, details considering timing considerations and the like have been omitted in as much as such details are not necessary to obtain a complete understanding of the present disclosure and are within the skills of persons of ordinary skill in the relevant art.

Further advantages and features of the present invention are now described with the aid of illustrative examples only and by no means limiting the scope of the invention, and from the attached drawings, in which the various figures show:

[Fig. 1] represents, schematically and partially, a block diagram of a computer-implemented method for the rendering of a 3D model of at least a portion of an organ according to one embodiment of the invention.

[Fig. 2] represents, schematically and partially, a map of points representing a part of an organ.

[Fig. 3] represents, schematically and partially, a mesh composed of a plurality of sub-meshes.

[Fig. 4] represents, schematically and partially, a mesh segmented into 5 distinct sub-meshes; each of said sub-meshes being associated with one class among a list of classes.

[Fig. 5] represents, schematically and partially, a mesh segmented into 5 distinct sub-meshes corresponding to 5 different thickness intervals.

[Fig. 6] represents, schematically and partially, a collection of sub-meshes, a point on one of said sub-meshes and a point extruded from the latter according to a projection point, a projection direction and a viewpoint.

[Fig. 7]

In the following description, identical elements, by structure or function, appearing in different figures retain, unless otherwise specified, the same references.

## Description of the modes of implementation.

The description of the preferred embodiments is intended to be read in connection with the accompanying drawings, which are to be considered part of the entire written description of these disclosures. While the present disclosure is susceptible to various modifications and alternative forms, specific embodiments are shown by way of example in the drawings and will be described in detail herein. The objectives and advantages of the claimed subject matter will become more apparent from the following detailed description of these exemplary embodiments in connection with the accompanying drawings.

It should be understood, however, that the present disclosure is not intended to be limited to the particular forms disclosed. Rather, the present disclosure covers all modifications, equivalents, and alternatives that fall within the spirit and scope of these exemplary embodiments.

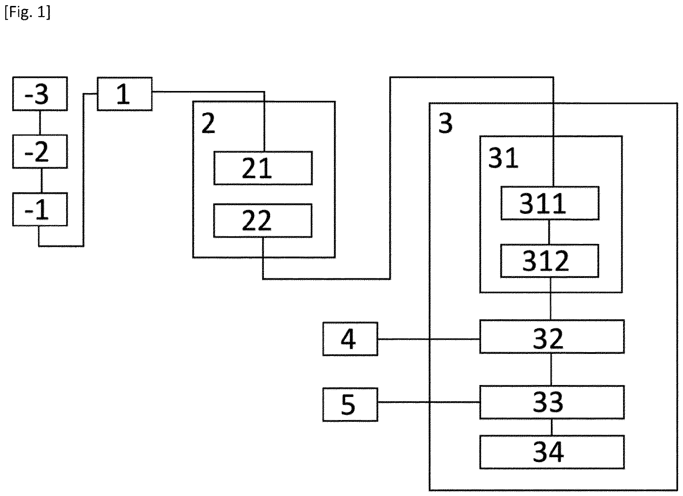

Figure 1 is a flowchart of a computer implemented method for rendering a 3D model 74 of at least a part of an organ. Beginning at step -3, method receives a mapping of points 60 representing the organ's portion, each point 61 from the mapping of points 60 being labelled with a value indicating the local thickness of the organ. Proceeding to step -2, the received mapping of points 60 is segmented from the thickness values and a list of classes 65, 66 to generate a plurality of sub-meshes 63, 64. The list of classes is composed by disjoint thickness intervals [0,2), [2,4), [4,6), [6,8) and [8,10), sorted by ascending value of thickness, in particular [0,2) < [2,4), [4,6), [6,8) and [8,10).

Proceeding to step -1, the plurality of sub-meshes 63, 64 is sorted according to a predetermined sorting criterion to construct a collection of sorted sub-meshes, the sorting criterion is based on the associated classes 65,66 of the sub-meshes as follows: for any two sub-meshes $m1$, $m2$; $m1$ is sorted before $m2$ if and only if the associated classes $c1$ and $c2$ satisfy the inequality $c1 < c2$.

Proceeding to step 1, the method receives the list of classes [0,2), [2,4), [4,6), [6,8) and [8,10) and a first mesh 62 representing the portion of the organ. The first mesh 62 comprises a collection of sub-meshes 63, 64, where each sub-mesh is associated with a single class 65, 66 among the list of classes. The collection of sub-meshes 63, 64 being previously sorted according to the increasing thickness value criterion.

Proceeding to step 2, the method performs sub-meshes extrusion for each point 61 of at least one sub-mesh 63 of the collection of sub-meshes. The extruded points 70 computed from the points 61 of a sub-mesh 63 form an extruded sub-mesh (non-represented).

The sub-meshes extrusion step 2 comprises a sub-step 21 of determining the projection point 67 of the sub-mesh 63 to be extruded and a sub-step 22 of projecting each point 61 of the sub-mesh 63 along a direction 68 passing through the point 61 and the projection point 67 with a distance determined from the rank of the sub-mesh 63 according to the sorting criterion.

Proceeding to step 3, the method renders a 3D model 74 of the organ comprising the extruded sub-meshes. The method computes an image of the organ from a given viewpoint 69, where each pixel of the image is iteratively computed from each sub-mesh of the sorted set. The current value of each pixel of the image is computed from the previous value of the pixel and the value of a corresponding fragment of a current sub-mesh of the sorted set.

Additionally, the method receives in a step 4 a second mesh 71 representing at least a second part of the organ classified as "opaque structure" and a third mesh 73 representing at least a third part of the organ classified as "transparent structure". The method renders the second mesh with computing a second image of the second part of the organ from the given viewpoint 69 and renders the third mesh 73 with computing a third image of the third part of the organ from the given viewpoint 69.

Finally, during a step 34 the method composes the first, second, and third meshes 72, 71, 73 into a final image, considering their respective classifications as "ordered structure", "opaque structure", and "transparent structure".

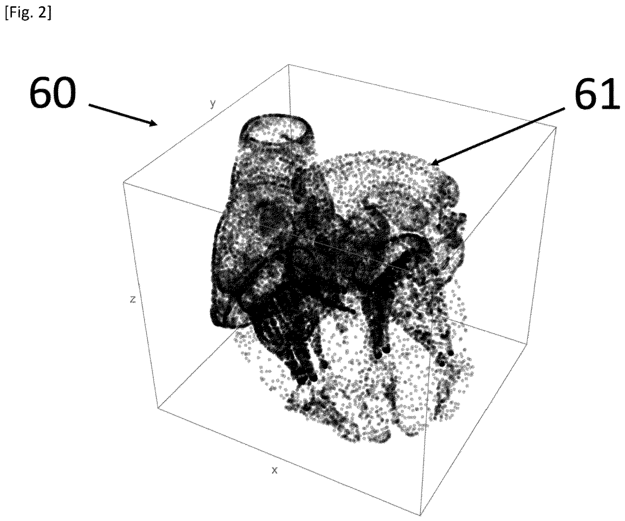

Figure 2 provides a schematic and partial view of a mapping of points 60 representing a part of an organ. The mapping of points 60 represents the portion of the organ to be rendered, and each point 61 is labeled with a value of at one parameter indicating a local characteristic of the organ at or around that point (-3).

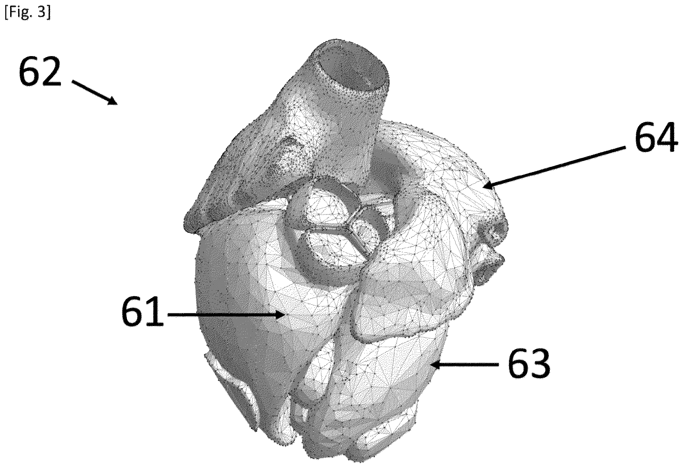

Figure 3 provides a schematic and partial view of a mesh 62 composed of a plurality of sub-meshes 63, 64, each of which is associated with a single class. The mesh 62 represents a portion of an organ to be rendered and is used in for rendering a 3D model of an organ. The sub-meshes 63, 64 are sorted according to a thickness criterion based on their associated classes 65, 66.

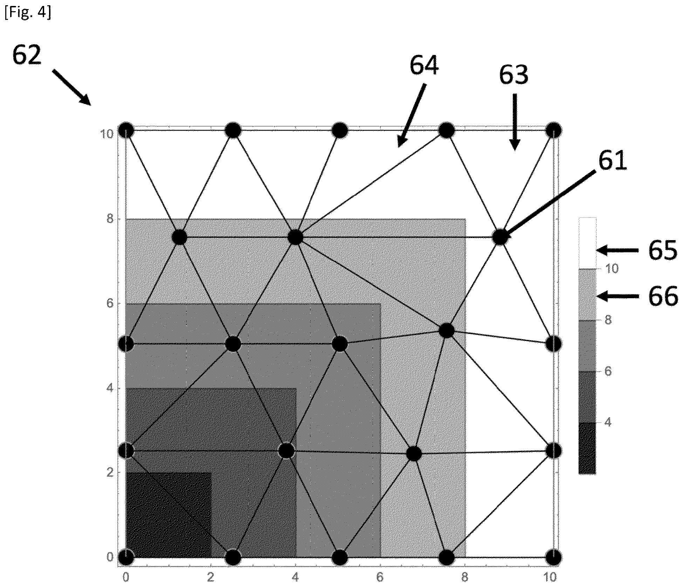

Figure 4 provides a schematic and partial view of a mesh 62 segmented into 5 distinct sub-meshes, each of which is associated with one class among a list of classes. The mesh represents 62 a portion of an organ to be rendered. The segmentation of the mesh 62 into sub-meshes 63, 64 is based on the thickness values on each point 61 and the list of classes. The segmentation leads to a plurality of sub-meshes, each of which is associated with a distinct class, said class being defined by a thickness range.

The set of sub-meshes is such that the thickness ranges considered are [2,4],[2,6],[2,8],[2,10] and [2,12], forming an increasing family of ranges for the inclusion operator, since $[2,4] \subset [2,6] \subset [2,8] \subset [2,10] \subset [2,12]$,

A point whose associated thickness value is 3, is therefore a point belonging to all the sub-meshes since 3 is an element of all the thickness ranges.

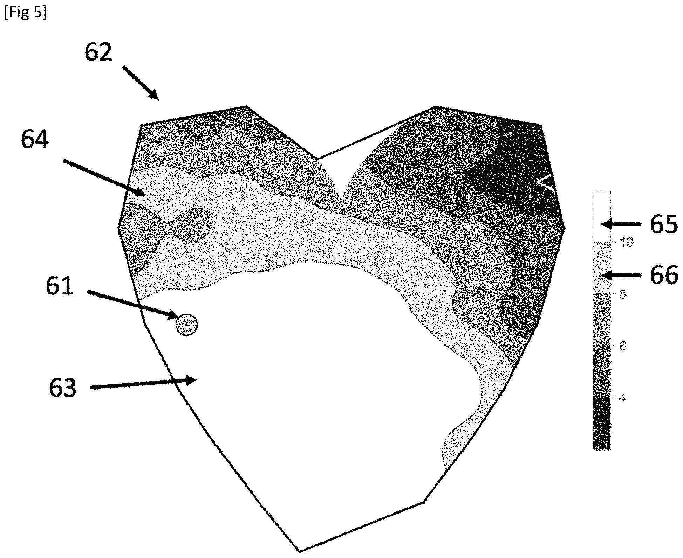

Figure 5 provides a schematic and partial view of a mesh 62 segmented into 5 distinct sub-meshes 63, 64 corresponding to 5 different thickness intervals 65, 66. The segmentation of the mesh into sub-meshes is based on the thickness ranges of the region of the organ that each sub-mesh represents. The thickness ranges are disjoint ranges that are sorted by increasing order of thickness, resulting in a collection of sorted sub-meshes that are used in the extrusion and rendering steps of the method.

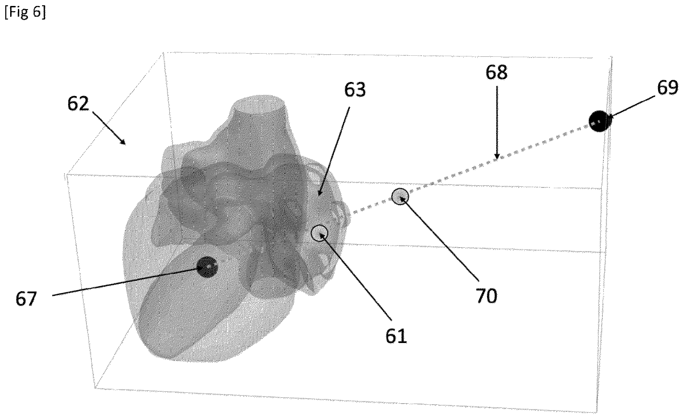

Figure 6 provides a schematic and partial view of a collection of sub-meshes, a point on one of the sub-meshes, and a point extruded from the latter according to a projection point 67, a projection direction 68, and a viewpoint 69. The collection of sub-meshes 63, 64 represents a portion of an organ to be rendered. The extrusion step of the method involves computing spatial coordinates of an extruded point 70 from spatial coordinates of a point 61 on a sub-mesh 63, a given extrusion direction 68, and the rank of the sub-mesh 63 in the collection of sub-meshes according to the increasing thickness criterion. The projection point 67, projection direction 68, and viewpoint 69 are used to generate a 3D model of the organ.

The foregoing description clearly explains how the invention achieves its stated objectives, namely a computer-implemented method for rendering complex models of portions of an organ; the method involves receiving a mesh representing the portion of the organ, which consists of a collection of sub-meshes associated with specific classes based on their thickness ranges. The collection of sub-meshes is sorted according to a predetermined sorting criterion, and the relevant sub-meshes are extruded based on their associated classes to enhance the depth perception of the rendered image.

The method further includes rendering the meshed model, which involves drawing the extruded and non-extruded sub-meshes according to the distance of each sub-mesh to a given perspective and the specified sorting criterion. The method also allows for the rendering of models of different parts of an organ with varying classifications and properties, such as ordered, opaque, and transparent structures, and composes the images based on their classification.

The invention provides a more efficient and accurate way of rendering complex models of portions of organs, which can have significant implications for medical diagnosis and treatment, research, and other related fields. The method can be particularly useful in the medical field, as it allows for the enhanced visualization of structures within the organ, which can aid in the identification of potential medical issues or abnormalities.

In any event, the invention is not limited to the embodiments specifically described herein and extends in particular to any equivalent means and to any technically effective combination of such means. In particular, it may be envisaged that the invention could be implemented using different algorithms, sorting criteria, color blending operators, and sub-mesh associations, without departing from the scope of the invention. Additionally, the invention may be applied to the rendering of portions of other types of organs, or even non-biological structures, as long as they can be represented by meshes and sub-meshes. The scope of the invention also encompasses various modifications and improvements that will be apparent to those skilled in the art, based on the teachings herein.

## Claims

1. A computer-implemented method for the rendering of a 3D model (74) of at least a portion of an organ comprising the steps of:

   a. step (1) of receiving a list of classes {c[1], ..., c[p]} and a first mesh (62) representing said at least a portion of an organ, said first mesh (62) comprising a collection (72) of N sub-meshes {m[1] ,..., m[N]}, each sub-mesh (63, 64) being associated with a single class (65, 66) among said list of classes, and the collection of sub-meshes being sorted according to a predetermined sorting criterion;
   b. step (2) of sub-meshes extrusion, comprising, for each point (61) of at least one sub-mesh (63) of said collection of sub-meshes, the computation of spatial coordinates of an extruded point (70) from spatial coordinates of said point (61), from a given extrusion direction (68) and from the rank of said mesh (63) in the collection according to the sorting criterion; the extruded points (70) computed from the points of a submesh forming an extruded sub-mesh;
   c. step (3) of rendering a 3D model (74) of the organ comprising the extruded sub-meshes.

2. The method according to claim 1, comprising, prior to the classes and mesh reception step (1):

   a. a step (-3) of receiving a mapping of points (60) representing said portion of the organ, each point (61) of said mapping of points (60) being labelled with a value of at least one parameter indicating a local characteristic of said portion of the organ at or around said point position (61);
   b. a step (-2) of segmentation of the received mapping of points (60) from said parameter values and said list of classes to generate a plurality of sub-meshes (63, 64);
   c. a step (-1) of sorting said plurality of sub-meshes according to said sorting criterion to construct said collection of sorted sub-meshes {m[1] ,..., m[N]}, said sorting criterion being based on the associated classes of the submeshes.

3. The method according to claim 2, wherein each submesh (63, 64) of the collection of sub-meshes {m[1] ,..., m[N]} represents a region of said portion of an organ whose thickness falls within a predetermined thickness range, said thickness range forming the associated class (65, 66) to said sub-mesh (63, 64), and wherein each thickness range is defined by a lower bound and an upper bound and wherein the thickness ranges are sorted such that a first range following a second range presents a lower bound and/or an upper bound greater than the lower bound and/or respectively the upper bound of the second range.

4. The method according to any of claims 1 to 3, wherein said sub-meshes extrusion step (2) comprises, for each sub-mesh (63) to be extruded (63), a sub-step (21) of determining said projection point (67) of said sub-mesh (63), and a sub-step (22) of projecting each point (61) of said sub-mesh (63) along a direction (68) passing through said point (61) and said projection point (67) with a distance determined from the rank of said sub-mesh (63) according to the sorting criterion.

5. The method according to any of the above claims, wherein the step of rendering (3) of said meshed model M2 includes a sub-step (31) of rendering at least the extruded sub-meshes (63) according to the distance of each sub-mesh (63) to a given viewpoint (69) and according to said specified sorting criterion.

6. The method according to the previous claim, wherein said sub-step (31) of rendering the extruded submeshes comprises:

   a. a step (311) of sorting said extruded submeshes (63) according to said predetermined sorting criterion into a sorted collection of submeshes; and
   b. a step (312) of computing an image of said part of an organ from said given viewpoint (69); each pixel of said image being iteratively computed from each sub-mesh of said sorted set; wherein, for each iteration, a current value of said pixel is computed from the previous value of said pixel and from the value of a corresponding fragment of a current sub-mesh of said sorted set; said current value being computed with composing the previous value of said pixel with the said value of corresponding fragment according to:

      i. a first color composition operator if the difference among the distance of said corresponding fragment between said viewpoint (69) and a buffered distance is lower than a predetermined threshold,
      ii. a second color composition operator otherwise, the buffered distance being updated to said distance of said corresponding fragment to said viewpoint (69) for the next iteration.

**7.** The method according to the previous claim, wherein the first color composition operator is an "over type" color blending operator, and the second color composition operator is an "under type" color blending operator.

**8.** The method according to any of previous claims, wherein said collection of sub-meshes (72) represents at least a first part of said organ and is received as being classified as "ordered structure"; wherein the method also comprises a step of receiving a second mesh (71) representing at least a second part of said organ and classified as "opaque structure" and a step of receiving a third mesh (73) representing at least a third part of said organ and classified as "transparent structure"; and wherein the step (3) of rendering of the model comprises :

    a. a sub-step (31) of rendering the first mesh (72) with computing a first image of said first part of said organ from a given viewpoint (69);
    b. a sub-step (32) of rendering the second mesh (71) with computing a second image of said second part of said organ from said given viewpoint. (69);
    c. a sub-step (33) of rendering the third mesh (73) with computing a third image of said third part of said organ from said given viewpoint (69);
    d. a sub-step (34) of composing said first, second and third images in a final image, the composition being operated considering the classification of the first (72), second (71) and third (73) meshes.

[Fig. 1]

[Fig. 2]

[Fig. 3]

[Fig. 4]

[Fig 5]

[Fig 6]

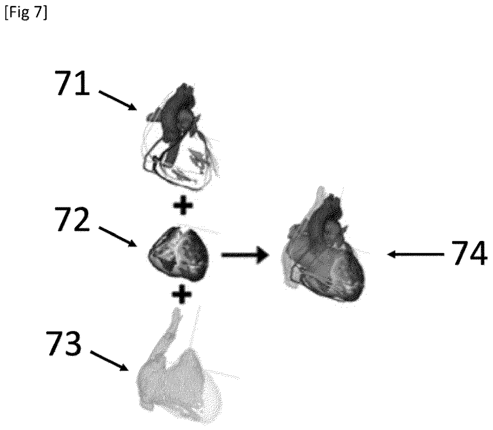

[Fig 7]

Europäisches
Patentamt

European
Patent Office

Office européen
des brevets

# EUROPEAN SEARCH REPORT

Application Number

**EP 23 16 6276**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN MINGQING ET AL: "Component-composition based heart isolation for 3D volume visualization of coronary arteries", 2015 IEEE 12TH INTERNATIONAL SYMPOSIUM ON BIOMEDICAL IMAGING (ISBI), IEEE, 16 April 2015 (2015-04-16), pages 1300-1303, XP033179693, DOI: 10.1109/ISBI.2015.7164113 [retrieved on 2015-07-21] * abstract * * page 1300, column 2, paragraph 3 – page 1301, paragraph 3; figures 1, 2, 4, 5, 6 * | 1-8 | INV. G06T19/00 |
| A | YEFENG ZHENG ET AL: "Four-Chamber Heart Modeling and Automatic Segmentation for 3-D Cardiac CT Volumes Using Marginal Space Learning and Steerable Features", IEEE TRANSACTIONS ON MEDICAL IMAGING, IEEE, USA, vol. 27, no. 11, 1 November 2008 (2008-11-01), pages 1668-1681, XP011233214, ISSN: 0278-0062, DOI: 10.1109/TMI.2008.2004421 * abstract * | 1-8 | TECHNICAL FIELDS SEARCHED (IPC) G06T |

-/--

The present search report has been drawn up for all claims

| Place of search | Date of completion of the search | Examiner |
|---|---|---|
| The Hague | 12 September 2023 | Martos Riaño, Demian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 23 16 6276

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MCGRAW TIM ET AL: "Hybrid rendering of exploded views for medical image atlas visualization", COMPUTER METHODS IN BIOMECHANICS AND BIOMEDICAL ENGINEERING: IMAGING & VISUALIZATION, 17 July 2017 (2017-07-17), pages 1-10, XP093079924, GB ISSN: 2168-1163, DOI: 10.1080/21681163.2017.1343686 * abstract * * page 670, column 1 * * page 671, column 1 - page 673, column 1; figures 8-17 * | 1-8 | |
| A | US 2016/038248 A1 (BHARADWAJ JEETENDRA [US] ET AL) 11 February 2016 (2016-02-11) * paragraph [0104] - paragraph [0105] * | 1-8 | |
| A | US 2015/190038 A1 (SAKURAGI FUTOSHI [JP]) 9 July 2015 (2015-07-09) * paragraph [0012] - paragraph [0015] * | 1-8 | TECHNICAL FIELDS SEARCHED (IPC) |
| A | ZHUANG XIAHAI ET AL: "Evaluation of algorithms for Multi-Modality Whole Heart Segmentation: An open-access grand challenge", MEDICAL IMAGE ANALYSIS, OXFORD UNIVERSITY PRESS, OXOFRD, GB, vol. 58, 1 August 2019 (2019-08-01), XP085878768, ISSN: 1361-8415, DOI: 10.1016/J.MEDIA.2019.101537 [retrieved on 2019-08-01] * abstract * | 1-8 | |

The present search report has been drawn up for all claims

| Place of search | Date of completion of the search | Examiner |
|---|---|---|
| The Hague | 12 September 2023 | Martos Riaño, Demian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 6276

This annex lists the patent family members relating to the patent documents cited in  the above-mentioned European search report.
The members are as contained in the European Patent Office EDP file on
The European Patent Office is in no way liable for these particulars which are merely given for the purpose of information.

12-09-2023

| Patent document cited in search report | | Publication date | Patent family member(s) | | Publication date |
|---|---|---|---|---|---|
| US 2016038248 | A1 | 11-02-2016 | AU 2015301863 | A1 | 23-02-2017 |
| | | | CA 2957715 | A1 | 18-02-2016 |
| | | | CN 107072625 | A | 18-08-2017 |
| | | | EP 3179918 | A1 | 21-06-2017 |
| | | | JP 2017532078 | A | 02-11-2017 |
| | | | US 2016038247 | A1 | 11-02-2016 |
| | | | US 2016038248 | A1 | 11-02-2016 |
| | | | US 2020242830 | A1 | 30-07-2020 |
| | | | US 2022130102 | A1 | 28-04-2022 |
| | | | WO 2016025484 | A1 | 18-02-2016 |
| US 2015190038 | A1 | 09-07-2015 | EP 2901934 | A1 | 05-08-2015 |
| | | | JP 5961504 | B2 | 02-08-2016 |
| | | | JP 2014064721 | A | 17-04-2014 |
| | | | US 2015190038 | A1 | 09-07-2015 |
| | | | WO 2014050018 | A1 | 03-04-2014 |

EPO FORM P0459

For more details about this annex : see Official Journal of the European Patent Office, No. 12/82